# EUROPEAN PATENT APPLICATION

(11) **EP 2 963 644 A1**
(43) Date of publication of application: **06.01.2016**
(21) Application number: 15170924.3
(22) Date of filing: 05.06.2015
(51) Int. Cl.: G10L 15/22, B60R 16/037, G10L 15/193

(54) **AUDIO COMMAND INTENT DETERMINATION SYSTEM AND METHOD**

(30) Priority: 01.07.2014 US 201414321562
(71) Applicant: Honeywell International Inc., Morris Plains, NJ 07950 (US)
(72) Inventor: KAR, Satyanarayan, Morristown, NJ New Jersey 07962-2245 (US); MEAD, Stephen, Morristown, NJ New Jersey 07962-2245 (US); MAZUMDAR, Anupam, Morristown, NJ New Jersey 07962-2245 (US)
(74) Representative: Houghton, Mark Phillip

(57) **Abstract**

Methods and apparatus are provided for generating aircraft cabin control commands from verbal speech onboard an aircraft. An audio command supplied to an audio input device is processed. Each word of the processed audio command is compared to words stored in a vocabulary map to determine a word type of each word. Each determined word type is processed to determine if an intent of the audio command is discernable. If the intent is discernable, an aircraft cabin control command is generated based on the discerned intent. If a partial intent is discernable, feedback is generated.

## Description

### TECHNICAL FIELD

The present invention generally relates to systems and methods for processing audio commands, and more particularly relates to systems and methods to accurately determine the intent of supplied audio commands.

### BACKGROUND

Recently, a new mobile device application ("app") has been developed that allows users to interact with certain aircraft cabin management systems (CMS) and in-flight entertainment systems. The app, once downloaded, can be used to control any aircraft equipped with the systems that utilize an Ethernet backbone. The app, however, does not presently support a speech interface, only a touchscreen graphical user interface.

Two significant challenges are associated with the desire to enable command and control via speech in an aircraft cabin. The first challenge is speech recognition accuracy, which is influenced by various factors, such as ambient environment, varying accents and dialects of passengers, and biases in the pitch between genders, just to name a few. The second challenge is the ability of a handheld device app to discern the intent from spoken words, which may or may not have errors, and then translate the spoken words into commands that are recognized by the CMS.

There is a need for a convenient way to model the grammar associated with aircraft cabin control functions in such a way as to anticipate the language used to invoke the functions and/or a relatively simple, easy to model, human readable grammar format that can be customized in anticipation of a user's usage patterns, and without the cost and latency of processing in ground-based data centers. The present invention addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a method of generating aircraft cabin control commands from verbal speech onboard an aircraft includes processing an audio command supplied to an audio input device, comparing each word of the processed audio command to words stored in a vocabulary map to determine a word type of each word, and processing each determined word type to determine if an intent of the audio command is discernable. If the intent is discernable, an aircraft cabin control command is generated based on the discerned intent. If no intent or only a partial intent is discernable, feedback is generated.

In another embodiment, a system for generating aircraft cabin control commands from verbal speech onboard an aircraft includes an audio input device, memory, and a processor. The audio input device is adapted to receive an audio command and is configured, upon receipt thereof, to supply speech signals representative thereof. The memory has a vocabulary map stored therein that includes a predetermined set of word types. The processor is in operable communication with the audio input device and the memory. The processor is coupled to receive the speech signals and is configured, upon receipt thereof, to compare each word of the received audio command to words stored in the vocabulary map to determine a word type of each word, and to determine, from each determined word type, if an intent of the audio command is discernable. If the intent is discernable, the processor generates an aircraft cabin control command based on the discerned intent. If no intent or only a partial intent is discernable, the processor generates feedback.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a simplified functional block diagram of an exemplary embodiment of a voice-commanded aircraft cabin control system;
FIG. 2 depicts an example embodiment of a normalized intent rules tree structure;
FIG. 3 depicts an exemplary process, in flowchart form, that may be implemented to generate a vocabulary map and a normalized intent rules tree structure; and
FIG. 4 depicts an exemplary process, in flowchart form, that the system of FIG. 1 implements to determine if the intent of an audio command is discernable.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

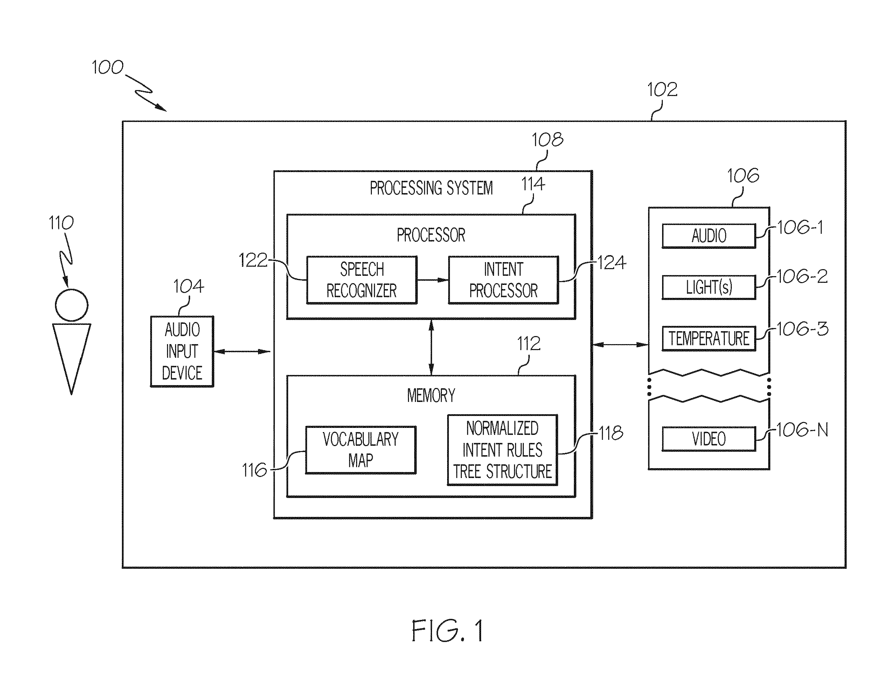

Referring to FIG. 1, a simplified functional block diagram of an exemplary embodiment of a voice-commanded aircraft cabin control system 100. The depicted system 100, which is preferably disposed within vehicle 102 such as an aircraft, includes one or more audio input devices 104 (only one depicted), a plurality of controllable cabin components 106 (106-1, 106-2, 106-3..., 106-N), and a processing system 108.

The audio input device 104 is adapted to receive audio commands, which may include one or more words, from a user 110. The audio input device 104 is configured, upon receipt of the audio commands, to supply speech signals representative thereof to the processing system 108. It will be appreciated that the audio input device 104 may be variously implemented and disposed. For example, it may be implemented using a microphone, an audio transducer, an audio sensor, or any one of numerous other suitable devices adapted to receive or otherwise sense audio input from a user 110. In some embodiments, the audio input device 104 may integrated as part of another device, such as a smart phone or other hand-held device. The audio input device 104 may also, in some embodiments, include an activation element that comprises a physical feature, such as a button or switch, which may be utilized to enable or otherwise activate the audio input device 104 (e.g., push-to-talk).

The controllable cabin components 106 are in operable communication with (either wired or wirelessly) the processing system 108. The controllable cabin components 106 are each adapted to receive aircraft cabin control commands that are supplied thereto by the processing system 108 and are configured, upon receipt thereof, to implement the command. The controllable cabin components 106 may vary in number and type. In the depicted embodiment, the controllable cabin components 106 include one or more audio devices 106-1, one or more lights 106-2, one or more temperature control devices 106-3, and one or more video devices 106-N. It will be appreciated that the depicted components 106 are merely exemplary, and that the system 100 may include additional controllable components that are responsive to commands supplied by the processing system 108.

The processing system 108 is in operable communication (either wired or wirelessly) with, and receives the speech signals supplied from, the audio input device 104. It will be appreciated that the processing system 108 may be variously implemented and disposed. For example, it may be implemented using one or more processors that are included in one or more systems in the vehicle 102. In some embodiments, the processing system 108 is integrated as part of another device, such as a smart phone or other hand-held device, and may be included in the same hand-held device as the audio input device 104. Regardless of its implementation and location, the processing system 108 is configured, upon receipt of the speech signals from the audio input device, to selectively generate aircraft cabin control commands that are representative of the supplied audio commands, and supply the aircraft cabin control commands to the appropriate controllable cabin component(s) 106.

The processing system 108 includes memory 112 and a processor 114. The memory 112, which may be variously configured and implemented, has a vocabulary map 116 and a normalized intent rules tree structure 118 stored therein. The vocabulary map 116 includes a predetermined set of word types. The set of word types may vary in number, but include at least context words and action words. In other embodiments, the set of word types may additionally include location words, source words, destination words, unit words, and value words, just to name a few.

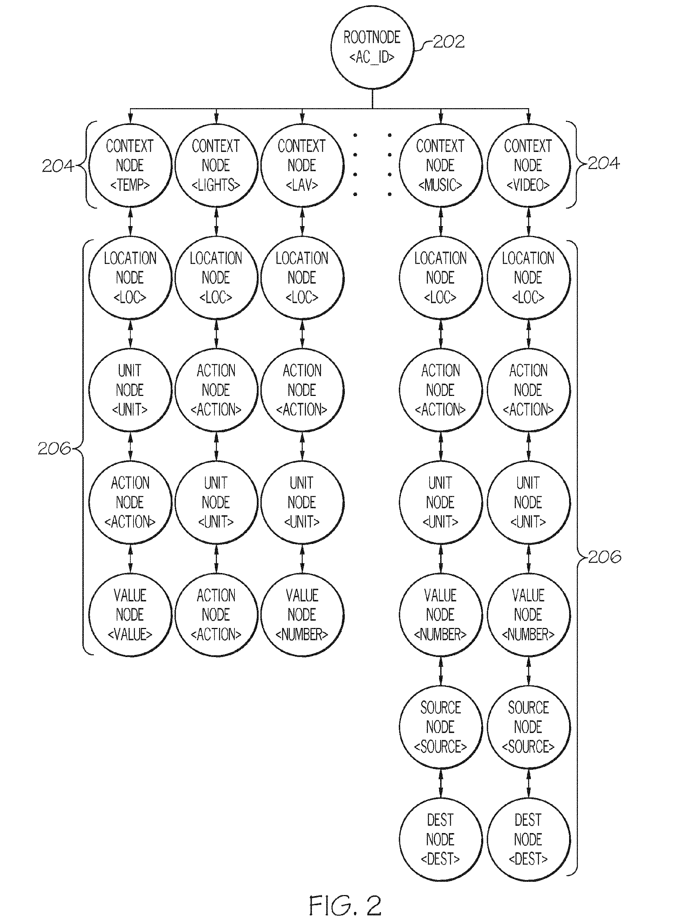

An example embodiment of a normalized intent rules tree structure 118 is depicted in FIG. 2, and includes a root node 202, a plurality of context nodes 204, and plurality of non-anchor nodes 206. The root node 202 is associated with the vehicle 102 in which the user 110 is located. Thus, as may be appreciated, there may be several normalized intent rule tree structures 118, each of which is associated with a different vehicle or different vehicle type. Preferably, the vehicle and/or vehicle type is selectable by the user 110.

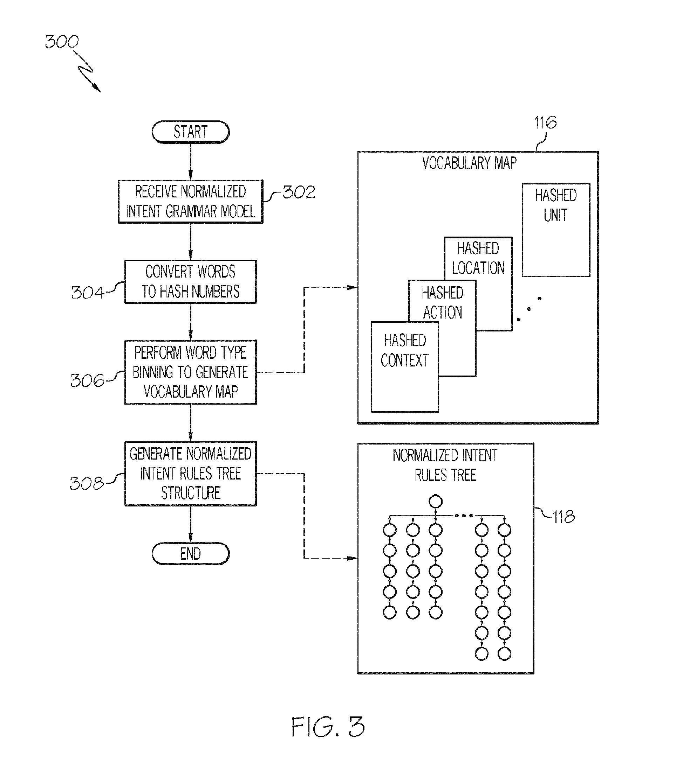

Each context node 204 corresponds to a context word type and, as FIG. 3 also depicts, serves as an anchor node that has a plurality of non-anchor nodes 206 associated therewith. Each non-anchor node 206 corresponds to a word type that is not a context word type. Thus, each non-anchor node 206 corresponds to at least action words, and may additionally correspond to location words, source words, destination words, unit words, and value words. As may be appreciated, each non-anchor node 206 preferably corresponds to a different one of the word types, and may thus be referred to as action nodes, location nodes, source nodes, destination nodes, unit nodes, and value nodes, respectively.

The audio commands supplied by the user 110 may include words that convey both implicit and explicit information. As will be described momentarily, processor 114 analyzes every recognizable word in the audio command against the appropriate normalized intent rules tree structure 118. To further enable the intent processor functionality, each anchor node 204 and each non-anchor node 206 includes a set of attributes. Each of these attributes is representative of information present in words that correspond to each anchor node 204 and each non-anchor node 206, and each attribute is used to determine the implicit and explicit information present in the words. The number and specific type of attributes may vary, but in the depicted embodiment the attributes that are available for each node 204, 206 include equivalent words, a command identification, a command mask value, a transform function, range values, and assistance media files. For completeness, each of these attributes will now be briefly described.

Since a specific intent can be described by varying words, every node type 204, 206 has an equivalent word attribute that contains the set of words that describes the intent of the node 204, 206. For example, an "Audio Volume" context node 204 can have equivalent word attributes that include "volume," "sound," "mute," "unmute," etc. If any of these equivalent words is recognized, the processor 114 would associate these words with the "Audio Volume" context node 204.

The command identification attribute is provided if the node type 204, 206 has enough information to dynamically generate an entire protocol word and requires a specific command identification to send the cabin control command. Typically, though not necessarily, the command identification attribute is associated with a non-anchor leaf node.

The command mask attribute is provided if, when the processor 114 parses all of the available information, the specific information in the node 204, 206 is sufficient to form a complete command protocol word. The command mask value provides guidance for the processor 114 to set the appropriate bits of the protocol word with the run time value mined from the audio command.

The transform function attribute and the range value attributes are both associated with unit node types 206. The transform function attribute is provided when a transformation from one unit to another is needed. For example, when the context node type 204 is temperature, the associated unit node type may be "Degree C," which may have a transform function to convert to the temperature to "Degree F." The range value attribute provides a means to save maximum and minimum range values.

The assistance media file attribute is provided if the processor 114 is unable to discern the intent of the audio command and, therefore, cannot generate an aircraft cabin control command. The assistance media file attribute is associated with context node types 206 and, based on the degree of the clarity in comprehending the intent, provides varying degrees of aural feedback to the user 110 to confirm the intent. The specific aural feedback files are tagged as an attribute of the context node types 204 to play for the user 110 or to generate a synthetic voice of the words that are unclear.

Returning once again to FIG. 1, it is seen that the processor 114 is in operable communication with the audio input device 104 and the memory 112. The processor 114 is coupled to receive the speech signals from the audio input device 104 and is configured, upon receipt thereof, to compare each word of the received audio command to words stored in the vocabulary map 116 to determine the word type of each word. The processor 114 is additionally configured to determine, from each determined word type, if the intent of the audio command is discernable. If so, the processor 114 will generate an aircraft cabin control command based on the discerned intent. If the intent of the audio command is not discernable, the processor 114 will generate suitable feedback to the user 110. To implement this functionality, the processor 114 includes at least a speech recognizer 122 and an intent processor 124, each of which will be now be described in more detail.

The speech recognizer 122 is coupled to receive the audio commands from the user 110. The speech recognizer 122 is configured, upon receipt of the audio commands, to generate one or more words for each word of the received audio commands, and to generate a hash value for each of the one or more words. It will be appreciated that the speech recognizer 122 may implement this function using any one of numerous known techniques, but in the depicted embodiment the speech recognizer 122 implements an N-best hypothesis algorithm to generate the one or more words for each word of the audio command, and generates the hash values for each of the one or more words by implementing a hashing algorithm that hashes each of the one or more words generated by the N-best hypothesis generator.

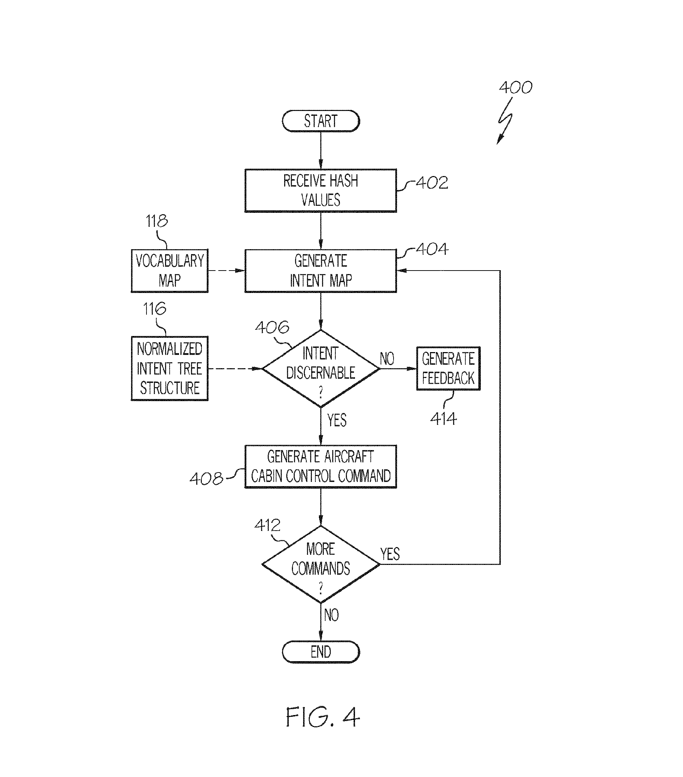

The intent processor 124 receives the hash values from the speech recognizer 122 and is configured, in response thereto, to implement the function of determining the word type of each word, and determining if the intent of the audio command is discernable. The process 400 implemented in the intent processor 124 to carry out this functionality is depicted in FIG. 4, and will be described momentarily. Before doing so, however, an exemplary process 300 that the processor 114 implements to generate the vocabulary map 116 and the normalized intent rules tree structure 118 is depicted in FIG. 3 and will now be described.

The memory 114 is supplied with a normalized grammar model for an aircraft cabin using XML notation (302). In a particular embodiment, and as noted above, each aircraft will have a root node 202, and multiple unique anchor/ context nodes 204, each of which is followed by non-anchor nodes 206 associated with the specific context. Upon initialization, all of the words in the grammar model are converted into a hash number by a hashing function (304). As may be appreciated, this is done to facilitate faster searches.

After being hashed, the hashed words are then binned to generate the vocabulary map 116 (306). To do so, a property is set for every hashed word that categorizes it into one of the predetermined word types/node types (e.g., context, action, location, source, destination, unit, value). The hashed words are also used to generate the normalized intent rules tree structure 118, as described above (308).

Referring now to FIG. 4, the process 400 implemented in the intent processor 124 will be described. Initially, the intent processor 124 receives the hash values associated with each word from the speech recognizer 122 (402). The intent processor 124 then generates an intent map for each word, in a binary format, that describes the number of word types/node types of each of the words (404). In the depicted embodiment, the intent processor 124 does this by representing each word as a plurality of bits (e.g., 8 bits), where each bit is representative of a different one of the predetermined number of word types.

Next, the intent processor 124 uses the intent map to determine if the intent of the audio command is discernable (406). In general, the intent is discernable if the intent processor 124 determines that the audio command includes at least a context word and an action word. As noted above, the context type nodes 204 serve as anchor nodes. Thus, the intent processor 124, using the normalized intent rules tree structure 118, the context node(s) 204, and the other word types/non-anchor nodes 206, determines if the context word generates a complete intent.

If the intent of the audio command is discerned, the intent processor 124 generates the aircraft cabin control command based on the discerned intent (408). As described above, the rules for generating the command are derived from the attributes associated with the appropriate nodes 204, 206. The intent processor 124 then checks to determine if the audio command included any additional commanded intent (412).

If the intent of the audio command cannot be discerned, the intent processor 124 generates feedback (414). It will be appreciated that the feedback may be visual feedback, aural feedback, or both. Moreover, the feedback that is generated is based on the partial intent that is discerned by the intent processor 124. If the intent is not discernable at all, a generalized type of feedback is generated. The appropriate feedback to be generated may be determined using the assistance media file attribute.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of generating aircraft cabin control commands from verbal speech onboard an aircraft, comprising the steps of:
processing an audio command supplied to an audio input device, the audio command including at least one word;
comparing each word of the processed audio command to words stored in a vocabulary map to determine a word type of each word, the vocabulary map comprising a predetermined set of word types; and
processing each determined word type to determine if an intent of the audio command is discernable;
if the intent is discernable, generating an aircraft cabin control command based on the discerned intent; and
generating feedback if no or only a partial intent of the audio command is discernable.

2. The method of claim 1, wherein the step of processing each determined word type to determine if the intent of the audio command is discernable comprises:
determining if the audio command includes at least a context word type and an action word type;
identifying an anchor node in a normalized intent rules tree structure that corresponds to the context word type;
determining if the action word type is associated with the anchor node and, if so, determining the intent therefrom.

3. The method of claim 2, wherein the normalized intent rules tree structure comprises:
a root node, the root node associated with the aircraft;
a plurality of context nodes, each context node corresponding to a context word type and serving as an anchor node that has a plurality of non-anchor nodes associated therewith,
wherein each non-anchor node corresponds to a word type that is not a context word type.

4. The method of claim 3, wherein:
each non-anchor node is one of at least an action node, a location node, a source node, a destination node, a unit node, and a value node; and
each anchor node and each non-anchor node comprises a set of attributes, each attribute representative of information present in words that correspond to each anchor node and each non-anchor node.

5. The method of claim 4, wherein the set of attributes comprises one or more of equivalent words, a command identification, a command mask value, a transform function, range values, and assistance media files.

6. The method of claim 1, wherein the step of processing the audio command comprises:
supplying the audio command to a speech recognizer;
implementing, in the speech recognizer, an N-best hypothesis algorithm to generate one or more words for each word of the audio command; and
hashing each of the one or more words generated by the N-best hypothesis generator to thereby generate a hash value for each of the one or more words.

7. The method of claim 1, further comprising:
generating an intent map for each word by representing each word as a plurality of bits, each bit representative of a different one of the predetermined number of word types.

8. The method of claim 1, wherein the predetermined set of word types comprises context words, action words, location words, source words, destination words, unit words, and value words.

9. A system for generating aircraft cabin control commands from verbal speech onboard an aircraft, the system comprising:
an audio input device adapted to receive an audio command and configured, upon receipt thereof, to supply speech signals representative thereof, the audio command including at least one word;
memory having a vocabulary map stored therein, the vocabulary map comprising a predetermined set of word types; and
a processor in operable communication with the audio input device and the memory, the processor coupled to receive the speech signals and configured, upon receipt thereof, to:
compare each word of the received audio command to words stored in the vocabulary map to determine a word type of each word,
determine, from each determined word type, if an intent of the audio command is discernable,
if the intent is discernable, generate an aircraft cabin control command based on the discerned intent, and
generate feedback if no or only a partial intent of the audio command is discernable.

10. The system of claim 9, wherein the processor is configured to determine if the intent of the audio command is discernable by:
determining if the audio command includes at least a context word type and an action word type;
identifying an anchor node in a normalized intent rules tree structure that corresponds to the context word type;
determining if the action word type is associated with the anchor node and, if so, determining the intent therefrom.

11. The system of claim 10, wherein the normalized intent rules tree structure comprises:
a root node, the root node associated with the aircraft;
a plurality of context nodes, each context node corresponding to a context word type and serving as an anchor node that has a plurality of non-anchor nodes associated therewith,
wherein each non-anchor node corresponds to a word type that is not a context word type.

12. The system of claim 11, wherein:
each non-anchor node is one of at least an action node, a location node, a source node, a destination node, a unit node, and a value node; and
each anchor node and each non-anchor node comprises a set of attributes, each attribute representative of information present in words that correspond to each anchor node and each non-anchor node.

13. The system of claim 9, wherein the processor comprises:
a speech recognizer adapted to receive the audio command, the speech recognizer configured to (i) supply implement an N-best hypothesis algorithm to generate one or more words for each word of the audio command and (ii) hash each of the one or more words generated by the N-best hypothesis generator to thereby generate a hash value for each of the one or more words.

14. The system of claim 9, wherein the processor is further configured to generate an intent map for each word by representing each word as a plurality of bits, each bit representative of a different one of the predetermined number of word types.

15. The system of claim 10, wherein the predetermined set of word types comprises context words, action words, location words, source words, destination words, unit words, and value words.
